# NEUE EUROPÄISCHE PATENTSCHRIFT

(11) **EP 0 503 225 B2**
(45) Veröffentlichungstag und Bekanntmachung des Hinweises auf die Entscheidung über den Einspruch: **07.08.2002**
(45) Hinweis auf die Patenterteilung: 05.04.1995
(21) Anmeldenummer: 92100244.0
(22) Anmeldetag: 09.01.1992
(51) Int. Cl.: B60T 8/88

(54) **Einrichtung mit Mitteln zur Fehlererkennung und -Anzeige**
Installation with means for fault detecting and display
Installation avec des moyens pour reconnaître des défauts et affichage

(30) Priorität: 02.03.1991 DE 4106704
(43) Veröffentlichungstag der Anmeldung: 16.09.1992
(73) Patentinhaber: WABCO STANDARD GmbH, 53008 Bonn (DE)
(72) Erfinder: Holst, Hans, W-3000 Hannover 91 (DE); Petersen, Erwin, Dr., W-3050 Wunstorf 1 (DE); Ruhnau, Gerhard, W-3057 Neustadt 1 (DE); Kaess, Harald, W-3004 Isernhagen NB (DE); Rothen, Johann, W-3203 Sarstedt (DE); Stanusch, Gerald, W-3207 Harsum (DE)
(74) Vertreter: Schrödter, Manfred, Dipl.-Ing.

(56) Entgegenhaltungen:
- FR-A- 2 345 323
- US-A- 4 009 914
- US-A- 4 831 868
- VDA Mitteilungen Nr.14, 30.10.1990, S.29

## Beschreibung

Die Erfindung betrifft eine Einrichtung mit Mitteln zur Fehler-Erkennung und -Anzeige für Komponenten und/oder Funktionen eines Fahrzeuges gemäß dem Oberbegriff des Patentanspruchs 1.

Eine derartige Einrichtung wird in Personenkraftwagen zur Überprüfung einer Antiblockier-Einrichtung verwendet, wobei die Start- und Zündeinrichtung des Fahrzeugs als Einschalt-Steuereinrichtung dient, die beim oder unmittelbar nach dem Zünden des Motors Einschaltsignale für die Prüfeinrichtung und die als Warnleuchte ausgebildete Anzeigeeinrichtung erzeugt. Dies bedeutet, daß nach dem Zünden des Motors die Warnleuchte zu leuchten beginnt und die Prüfeinrichtung zyklisch Prüfzyklen zur Überprüfung bestimmter Komponenten (z.B. Kabel, Stecker, Sensoren, Elektroniken, Magnetventile) und Funktionen abarbeitet. Wenn der erste definierte Prüfzyklus der Prüfeinrichtung abgelaufen ist und kein Fehler festgestellt wurde, wird die Warnleuchte ausgeschaltet. Dies geschieht relativ schnell, so daß diese Prüfung praktisch bei stehendem Fahrzeug abläuft. Auf diese Weise wird eine schnelle und einfache Überprüfung der Antiblockier-Einrichtung schon vor Fahrtbeginn erreicht. Für den Fall, daß ein Fehler festgestellt wird, bleibt die Warnleuchte - wie auch beim Feststellen von Fehlern während der Fahrt des Fahrzeuges - dauernd eingeschaltet.

Einige Fehler der erwähnten Komponenten und Funktionen können jedoch nicht während des durch das stehende Fahrzeug gekennzeichneten ersten Betriebszustandes auftreten und festgestellt werden, sondern solche auch als dynamische Fehler bezeichneten Fehler können erst dann auftreten und festgestellt werden, wenn das Fahrzeug eine bestimmte Mindestgeschwindigkeit erreicht hat bzw. sich die Räder auf einem Prüfstand erst mit einer Mindestdrehzahl drehen. Zu diesen erst in dem oberhalb einer vorgegebenen Mindestgeschwindigkeit vorliegenden zweiten Betriebszustand des Fahrzeugs auftretenden und feststellbaren Fehlem gehören u.a. Fehler der von Drehzahlsensoren an Rädern oder wenigstens einer Achse erzeugten Signale.

Die beschriebene unmittelbar nach dem Start des Motors des Fahrzeugs ablaufende Prüfung der Antiblockier-Einrichtung bei stehendem Fahrzeug kann also nur in diesem ersten Betriebszustand auftretende und feststellbare Fehler (Fehler erster Art) zur Anzeige bringen. Dynamische Fehler (Fehler zweiter Art), die nur in dem zweiten, der Fahrt oberhalb der vorgegebenen Mindestgeschwindigkeit entsprechenden Betriebszustand des Fahrzeugs auftreten und feststellbar sind, werden bei der beschriebenen Prüfung des Fahrzeugs zunächst nicht berücksichtigt.

Aus der DE-OS-26 12 461 ist eine Prüfeinrichtung für Antiblockiersysteme bekannt, bei der beim Erreichen einer vorgegebenen kleinen Geschwindigkeit der Prüfvorgang ausgelöst wird. Nach Betätigen des Zündschalters wird eine Warnlampe eingeschaltet, die am Testende erlischt, soweit während des Prüfvorgangs kein Fehler festgestellt wurde. In anderer Weise als die vorliegende Erfindung liegt der Kern der DE-OS-26 12 461 darin, daß der Testprozeß wegen den dabei entstehenden großen Störungen vom Anlaßzeitpunkt zeitig wegverlegt wird in die Anfahrphase, die dadurch bestimmt ist, daß eine vorgegebene Geschwindigkeit erreicht wird.

Bei Nutzfahrzeugen ist es bekannt, die Überprüfung einer Antiblockier-Einrichtung und damit das Leuchten der Warnleuchte grundsätzlich so lange auszudehnen, bis der erwähnte zweite Betriebszustand des Fahrzeugs, d.h. eine vorgegebene Mindestgeschwindigkeit erreicht wurde und dynamische Fehler meßbar sind. Auf diese Weise ist es möglich, schon in der Anfahrphase des Nutzfahrzeugs eine Überprüfung der Drehzahlsensoren vorzunehmen, so daß der Fahrer rechtzeitig auf etwaige dynamische Fehler wie z.B. Drehzahlsensor-Fehler bzw. Fehler der Drehzahlsensor-Signale aufmerksam gemacht wird. Bei einer solchen Einrichtung muß der Fahrer das Nutzfahrzeug also erst in Bewegung setzen, damit ein Erlöschen der Warnleuchte erfolgen kann, wenn kein Fehler festgestellt wird. Dies führt zu einer relativ langen Anschaltdauer der Warnleuchte.

Der Erfindung liegt die Aufgabe zugrunde, eine Einrichtung der eingangs genannten Art so zu verbessern, daß schon in dem ersten Betriebszustand (z.B. stehendes Fahrzeug) eine Erkennung und Anzeige von möglichen, nur in einem zweiten Betriebszustand auftretenden und feststellbaren (z.B. dynamischen) Fehlern erfolgen kann.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben. Weiterhin werden vorteilhafte Verfahren zur Anwendung der erfindungsgemäßen Einrichtung angegeben.

Bei der Erfindung wird in vorteilhafter Weise als Kriterium für das mögliche Auftreten von Fehlern zweiter Art, die nur, während des zweiten Betriebszustandes des Fahrzeuges auftreten und festgestellt werden können, die Tatsache genutzt, daß ein solcher, Fehler bei einem vorhergehenden Betrieb des Fahrzeuges auftrat.

Die Erfindung hat den Vorteil, daß der Betreiber des Fahrzeuges das selbsttätige Umschalten der Einrichtung von dem Normalbetrieb in den davon abweichenden Betrieb durch die unterschiedliche Einschaltdauer der Anzeigeeinrichtung feststellen kann und somit einen Hinweis darauf erhält, daß während eines früheren Betriebes des Fahrzeuges Fehler zweiter Art aufgetreten sind und daß es ratsam ist, eine genaue vollständige Überprüfung gegebenenfalls durch eine autorisierte Stelle vornehmen zu lassen.

Gemäß der Erfindung wird die Anzeigeeinrichtung auch im Zusammenhang mit dem erstmaligen Einschalten des Fahrzeuges nach dem Einbau einer neuen Steuereinrichtung oder dem Neueinstellen der Steuereinrichtung erst nach der Beendigung eines nach Erreichen einer den zweiten Betriebszustand charakterisierenden Mindestgeschwindigkeit des Fahrzeuges ablaufenden Prüfzyklus der Prüfeinrichtung ausgeschaltet, wenn kein Fehler festgestellt wird. So wird gewährleistet, daß auch in diesen Sonderfällen etwaige Fehler früh erkannt werden.

In einer weiteren Ausbildung der Erfindung wird ein Teil des löschbaren nicht-flüchtigen Fehlerspeichers in eine löschbare nicht-flüchtige Speicherkopie übernommen. Es ist vorgesehen, daß die Speicherkopie wenigstens alle Fehler zweiter Art enthält.

Gemäß einer weiteren Ausbildung der Erfindung wird die erwähnte Speicherkopie nach einer bestimmten Anzahl von Einschaltvorgängen des Gerätes gelöscht. Diese Löschung wird allerdings nur in den Fällen vorgenommen, in denen bis zum Erreichen dieser Anzahl von Einschaltvorgängen keine Fehler mehr in der Speicherkopie gespeichert werden. Dieses Verfahren stellt sicher, daß bei dem Auftreten von einmaligen Fehlern dem Betreiber des Fahrzeuges nach einer bestimmten Anzahl von Einschaltvorgängen mittels der dann ausgeschalteten Anzeigeeinrichtung mitgeteilt wird, daß hier nur ein zeitlich eng begrenztes Fehlverhalten vorlag, das die Funktionsweise des fahrzeuges praktisch nicht beeinträchtigt.

Die erfindungsgemäße Einrichtung kann sowohl weitgehend hardwaremäßig unter Verwendung bestimmter Komponenten und Schaltungen für die einzelnen Teilfunktionen als auch weitgehend softwaremäßig unter Verwendung von Prüfsoftware und Signalverarbeitungssoftware realisiert werden. Dabei sind zwei vorteilhafte Verfahren zum Ablauf der Funktionen der erfindungsgemäßen Einrichtung möglich.

Zum einen kann zunächst das Ergebnis des ersten vollständigen Prüfzyklus der Prüfeinrichtung festgestellt werden und - falls während des ersten vollständigen Prüfzyklus ein Fehler festgestellt wird - die Anzeigeeinrichtung eingeschaltet bleiben. Falls jedoch während des ersten vollständigen Prüfzyklus kein Fehler festgestellt wird, wird die Anzeigeeinrichtung beim Vorliegen wenigstens eines Fehlers zweiter Art im Fehlerspeicher erst nach der Beendigung eines nach Erreichen des zweiten Betriebszustandes ablaufenden Prüfzyklus der Prüfeinrichtung ausgeschaltet, wenn kein Fehler festgestellt wird.

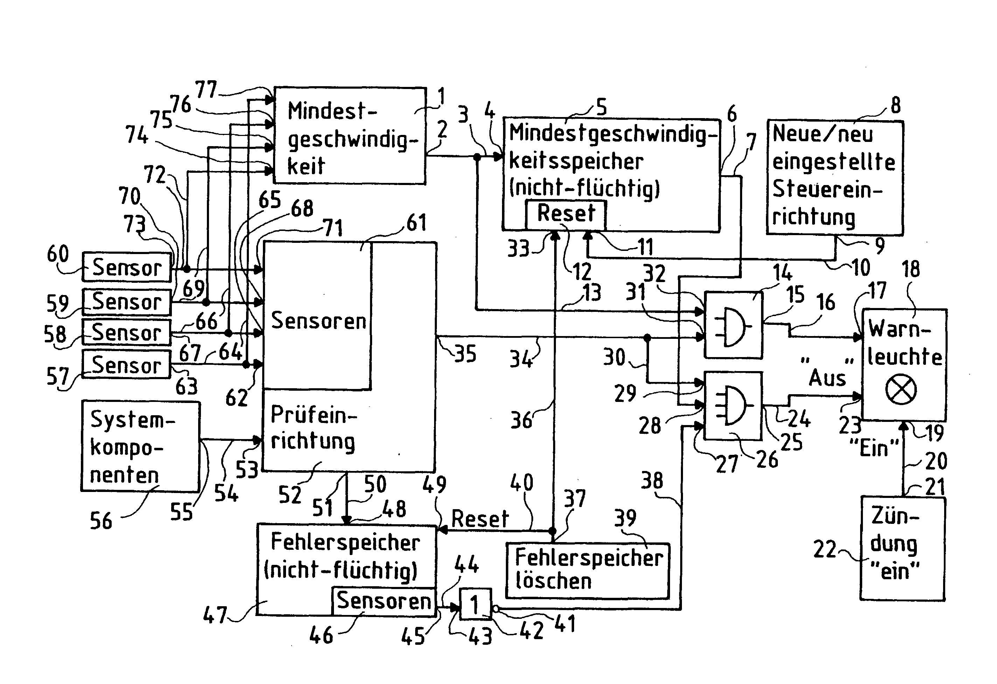

Die Erfindung wird anhand eines Ausführungsbeispieles, das in der Zeichnung dargestellt ist, näher erläutert.

Die Zeichnung zeigt Teile einer Antiblockier-Einrichtung für ein Radfahrzeug, bei dem vier Drehzahlsensoren (57 bis 60) zur Ermittlung von Rad- oder Achsgeschwindigkeitssignalen und daraus abgeleiteten Radbeschleunigungs- und Radverzögerungssignalen vorgesehen sind.

Diese Signale werden in einer Steuereinrichtung verarbeitet, die im Falle einer Gefahr des Blockierens der Fahrzeugräder ihrerseits in üblicher Weise Bremsdrucksteuerventile zur Beeinflussung des Bremsdruckes ansteuert.

In der Zeichnung sind nur die für die Beschreibung des Ausführungsbeispieles wesentlichen Funktionseinheiten dargestellt. Nicht dargestellt ist die Steuereinrichtung für die Antiblockier-Einrichtung sowie die Bremsdrucksteuerventile. Alle weiteren für die Funktion der Antiblockier-Einrichtung notwendigen und einer Prüfung zugänglichen Komponenten sind durch den Block (56) gekennzeichnet, der alle entsprechenden Systemkomponenten wie Kabel, Stecker, Elektroniken, Ventile, Druckmodulatoren etc. enthält.

Die in der Zeichnung dargestellte Einrichtung dient dazu, die Antiblockier-Einrichtung auf Fehler der Komponenten und Funktionsfehler hin zu überprüfen. Zu diesem Zweck ist eine Prüfeinrichtung (52) vorgesehen, die mit oder unmittelbar nach dem Starten des Fahrzeugs eingeschaltet wird und einen definierten Prüfzyklus durchläuft, mit dem während der Startphase bei stehendem Fahrzeug möglichst viele Fehler festgestellt und angezeigt werden können. In dem so definierten ersten Betriebszustand des Fahrzeugs können allerdings nur bestimmte Fehler erster Art wie z.B. Kabelbruch, Steckervertauschung etc. festgestellt und angezeigt werden. Andere Fehler, nämlich solche zweiter Art, auch als dynamische Fehler zu bezeichnende Fehler, sind erst dann feststellbar und anzeigbar, wenn das Fahrzeug eine vorgegebene Mindestgeschwindigkeit, also einen zweiten Betriebszustand erreicht hat.

Die dargestellte Einrichtung dient dazu, eine Warnleuchte (18), die beim Starten des Fahrzeuges ("Zündung ein") eingeschaltet wird, während des ersten Betriebszustandes des Fahrzeuges solange leuchten zu lassen, bis die Prüfeinrichtung (52) festgestellt hat, daß bei bestimmten, einer Prüfung zugänglichen Komponenten - Systemkomponenten (56) sowie Drehzahlsensoren (57 bis 60) - mittels vorbestimmter erster Fehlerprüfungen beim Durchlaufen eines definierten Prüfzyklus der Prüfeinrichtung (52) kein Fehler erster Art festgestellt wird. Dabei wird allerdings berücksichtigt, ob die Prüfeinrichtung (52) vorher schon einmal während des zweiten Betriebszustandes z.B. während einer vorhergehenden Fahrt mittels vorbestimmter zweiter Fehlerprüfungen einen Fehler zweiter Art festgestellt hat oder nicht. Zur Speicherung solcher Fehler dient ein löschbarer nicht-flüchtiger Fehlerspeicher (47), d.h. nach dem Abschalten der Stromversorgung bleibt der Inhalt dieses Speichers unverändert erhalten.

Die Einrichtung verfügt über ein erstes UND-Glied (14) und ein zweites UND-Glied (26). Mittels des zweiten UND-Gliedes (26) wird geprüft, ob der Fehlerspeicher (47) einen definierten Fehler (Fehler zweiter Art) enthält oder nicht. Wenn kein Fehler dieser Art im Fehlerspeicher (47) gespeichert ist, kann unmittelbar nach dem Starten des Fahrzeuges die Warnleuchte (18) ausgeschaltet werden, wenn kein Fehler vorliegt.

Falls das zweite UND-Glied (26) wegen eines Fehlers im Fehlerspeicher (47) gesperrt ist, kann die Prüfeinrichtung (52) die Warnleuchte (18) über das erste UND-Glied (14) erst dann ausschalten, wenn das Fahrzeug eine vorgegebene Mindestgeschwindigkeit erreicht hat, was mittels eines Geschwindigkeitskomparators (1) festgestellt wird und wenn keine Fehler registriert wurden.

Der Geschwindigkeitskomparator (1) ist mit Eingängen (74, 75, 76, 77) versehen, die über Signalleitungen (64, 66, 69, 72) mit den Ausgängen (63, 67, 70, 73) von vier Drehzahlsensoren (57, 58, 59, 60) verbunden sind.

Jeder dieser Drehzahlsensoren (57 bis 60) ist jeweils einem nicht dargestellten Rad des vierrädrigen Radfahrzeuges zugeordnet. Der Geschwindigkeitskomparator (1) dient dem Vergleich der mittels der Drehzahlsensoren (57 bis 60) festgestellten Radgeschwindigkeiten mit einer festgelegten Mindestgeschwindigkeit, die im vorliegenden Fall 7 km/h beträgt. Die Signalleitungen (64), (66), (69), (72) sind gleichzeitig mit den Eingängen (62), (65), (68), (71) einer Sensorprüfeinrichtung (61) verbunden, die einen Teil einer übergeordneten Prüfeinrichtung (52) bildet und den oben erwähnten definierten Fehlern zugeordnet ist. Die Prüfeinrichtung (52) sendet Prüfsignale in Form von Prüfzyklen an alle zu prüfenden Teile der Antiblockier-Einrichtung und empfängt an einem weiteren Eingang (53) die rückgemeldeten Prüfsignale der anderen Systemkomponenten (56), die vom Systemkomponentenausgang (55) über eine Signalleitung (54) übermittelt werden.

Die Sensorsignale werden im Geschwindigkeitskomparator (1) verarbeitet. Die am Ausgang (2) des Geschwindigkeitskomparators (1) anstehenden Signale werden einerseits über eine Signalleitung (3) dem Eingang (4) eines Mindestgeschwindigkeitsspeichers (5) zugeführt, der speichert, ob jemals die Mindestgeschwindigkeit vom Geschwindigkeitskomparator erkannt worden ist. Andererseits werden diese Signale über eine Signalleitung (13), die mit der Signalleitung (3) verbunden ist, einem ersten Eingang (32) des ersten UND-Gliedes (14) zugeführt. Der Mindestgeschwindigkeitsspeicher (5) verfügt über einen Ausgang (6), der über eine Signalleitung (7) mit einem ersten Eingang (28) des zweiten UND-Gliedes (26) verbunden ist. Außerdem verfügt der Mindestgeschwindigkeitsspeicher (5) über eine Rücksetzeinrichtung (12) (Reset), die den Mindestgeschwindigkeitsspeicher (5) beim Vorliegen entsprechender Signale an den zwei Rücksetzeingängen (11) und (33) löscht. In einem Fall erfolgt die Rücksetzung des Mindestgeschwindigkeitsspeichers (5) über eine Überwachungseinrichtung (8), die feststellt, ob eine neue Steuereinrichtung in das Radfahrzeug eingebaut wurde oder als die Steuereinrichtung neu eingestellt wurde. Zu diesem Zweck ist der Ausgang (9) der Überwachungseinrichtung (8) über eine Signalleitung (10) mit dem Rücksetzeingang (11) der Rücksetzeinrichtung (12) des Mindestgeschwindigkeitsspeichers (5) verbunden. Der Mindestgeschwindigkeitsspeicher (5) ist als nichtflüchtiger Speicher ausgebildet, d.h. nach dem Abschalten der Stromversorgung bleibt der Inhalt dieses Speichers unverändert erhalten.

Die Prüfeinrichtung (52) verfügt über einen ersten Signalausgang (35), der über eine Signalleitung (34) mit einem zweiten Eingang (31) des ersten UND-Gliedes (14) verbunden ist. Gleichzeitig wird das am ersten Signalausgang (35) der Prüfeinrichtung (52) stehende Signal über eine Signalleitung (30), die mit der Signalleitung (34) verknüpft ist, auf einen zweiten Eingang (29) des zweiten UND-Gliedes (26) geführt.

Weiterhin verfügt die Prüfeinrichtung (52) über einen zweiten Signalausgang (51), der über eine Signalleitung (50) mit dem Eingang (48) des löschbaren nicht-flüchtigen Fehlerspeichers (47) verbunden ist. Ein Teilbereich des Fehlerspeichers (47) ist als Sensorfehlerspeicher (46) ausgebildet, der alle Fehler, die im Zusammenhang mit den DrehzahlSensoren (57), (58), (59) und (60) stehen, speichert.

Der Fehlerspeicher (47) ist so ausgelegt, daß ein erkannter definierter Fehler nach der Speicherung nicht mehr gelöscht wird, auch wenn sich in späteren Prüfzyklen herausstellt, daß dieser bestimmte Fehler nicht mehr auftritt. Insbesondere sind dabei solche definierten Fehler von Interesse, die auf das dynamische Verhalten der Drehzahlsensoren zurückzuführen sind, wie z.B. Polradtaumelschläge, ein zu großes Radlagerspiel oder ein zu großer Sensor-Polrad-Abstand.

Über einen Ausgang (45) des Sensorfehlerspeichers (46) führt eine Signalleitung (44) auf den Eingang (43) eines Negationsgliedes (42). Der Ausgang (41) des Negationsgliedes (42) ist über eine Signalleitung (38) mit einem dritten Eingang (27) des zweiten UND-Gliedes (26) verbunden. Der Fehlerspeicher (47) verfügt über einen Rücksetzeingang (49) (Reset), der von dem Ausgang (37) einer Fehlerspeicherlöscheinrichtung (39) über eine Signalleitung (40) angesteuert wird. Gleichzeitig ist der Ausgang (37) der Fehlerspeicherlöscheinrichtung (39) über eine Signalleitung (36), die an die Signalleitung (40) angeschlossen ist, mit dem zweiten Rücksetzeingang (33) der Rücksetzeinrichtung (12) des Mindestgeschwindigkeitsspeichers (5) verbunden.

Der Ausgang (15) des ersten UND-Gliedes (14) wird mittels einer Signalleitung (16) auf den ersten Eingang (17) der Warnleuchte (18) geführt. Der Ausgang (25) des zweiten UND-Gliedes ist über eine Signalleitung (24) mit einem zweiten Eingang (23) der Warnleuchte (18) verbunden. Ein dritter Eingang (19) der Warnleuchte (18) wird über eine Signalleitung (20) von dem Ausgang (21) einer Einrichtung (22) angesteuert, die ein Signal erzeugt, wenn die Antriebseinrichtung des Fahrzeuges - im vorliegenden Fall die Zündung einer Brennkraftmaschine - eingeschaltet wird.

Die vorstehende beschriebene Einrichtung arbeitet wie folgt:
Mit dem Einschalten der Zündung (22) des Radfahrzeuges erfolgt gleichzeitig das Einschalten der Warnleuchte (18). Parallel zu diesem Vorgang wird die Prüfeinrichtung (52) in nicht dargestellter Weise eingeschaltet. Sobald die Prüfeinrichtung (52) funktionsfähig ist, werden in einem bestimmten Zeittakt Prüfzyklen in Form von Prüfsignalen von der Prüfeinrichtung (52) gestartet, die die Drehzahlsensoren (57 bis 60) und die Systemkomponenten (56) auf ihre Funktion hin überprüfen. Stellt die Prüfeinrichtung bei den von ihr empfangenen rückgemeldeten Prüfsignalen fest, daß eine Komponente der Antiblockier-Einrichtung fehlerhaft ist, so wird dieser Fehler (Fehler erster Art) in dem löschbaren nicht-flüchtigen Fehlerspeicher (47) abgelegt. Parallel zu dieser Speicherung sperrt die Prüfeinrichtung (52) sowohl das erste UND-Glied (14) als auch das zweite UND-Glied (26). Unabhängig von den anderen Eingängen der UND-Glieder sind diese beiden Logikglieder jetzt so geschaltet, daß die Warnleuchte (18) weder im Stand noch während der Fahrt erlischt. Erst eine Rücksetzung des Fehlerspeichers (47) mittels der Fehlerspeicherlöscheinrichtung (39) führt dazu, daß die Warnleuchte (18) ausgeschaltet werden kann.

Wird nach dem Einschalten der Zündung, d.h. während der Startphase des Radfahrzeuges, kein Fehler zweiter Art festgestellt und ist auch im Fehlerspeicher (47) kein Fehler gespeichert, so schaltet die Prüfeinrichtung (52) die Warnleuchte (18) über das zweite UND-Glied (26) praktisch noch im Stand des Radfahrzeuges ab, falls im löschbaren nicht-flüchtigen Mindestgeschwindigkeitsspeicher (5) die Information vorliegt, daß der Geschwindigkeitskomparator (1) schon einmal, d.h. während einer vorhergehenden Fahrt, die Mindestgeschwindigkeit erkannt hat. Diese Funktionsweise kennzeichnet den Normalbetrieb der Antiblockier-Einrichtung.

Liegt andererseits im Fehlerspeicher (47) während der erwähnten Startphase ein Fehler vor, so bleibt die Warnleuchte (18) zunächst weiterhin eingeschaltet, da das zweite UND-Glied (26) durch das Vorliegen eines Fehlers im Fehlerspeicher (47) gesperrt ist. Die Warnleuchte (18) leuchtet jetzt so lange, bis der Geschwindigkeitskomparator (1) die Mindestgeschwindigkeit an allen vier Rädern erkannt hat. Nach Erreichen dieses Zeitpunktes wird die Warnleuchte (18) von der Prüfeinrichtung (52) über das erste UND-Glied (14) ausgeschaltet, wenn von der Prüfeinrichtung (52) kein Fehler festgestellt wird.

Nach jeder Reparatur an der Antiblockier-Einrichtung des Radfahrzeuges wird der Fehlerspeicher (47) über die Fehlerspeicherlöscheinrichtung (39) zurückgesetzt, so daß im Fehlerspeicher keine gespeicherten Fehler mehr vorliegen. Gleichzeitig gibt die Fehlerspeicherlöscheinrichtung (39) ein Signal auf die Rücksetzeinrichtung (12) des Mindestgeschwindigkeitsspeichers (5). Dieser Vorgang führt zu einem Löschen des Mindestgeschwindigkeitsspeichers (5), so daß keine Information mehr darüber vorliegt, daß das Fahrzeug schon einmal die Mindestgeschwindigkeit erkannt hat. Da dann der Mindestgeschwindigkeitsspeicher (5) leer ist, ist auch das zweite UND-Glied (26) gesperrt. Die Warnleuchte (18) erlischt auch in diesem Fall erst dann, wenn der Geschwindigkeitskomparator (1) die Mindestgeschwindigkeit erkannt hat und die Prüfeinrichtung (52) keinen Fehler feststellt.

Eine weitere Funktion der Antiblockier-Einrichtung sieht vor, daß in einer Überwachungseinrichtung (8) festgestellt wird, ob eine neue oder neu eingestellte Steuereinrichtung in die Antiblockier-Einrichtung eingebaut wurde. Ist dies der Fall, so wird der Mindestgeschwindigkeitsspeicher (5) in der beschriebenen Weise gelöscht, weil eine neue Steuereinrichtung in das Radfahrzeug eingebaut wurde oder die Steuereinrichtung neu eingestellt wurde. Dies bedeutet für die Warnleuchte (18), daß sie auch jetzt erst nach Erreichen der Mindestgeschwindigkeit über das erste UND-Glied (14) gelöscht wird.

Generell gilt für die beschriebene Antiblockier-Einrichtung, daß die Warnleuchte (18) für die Dauer der betreffenden Fahrt bis zum Ausschalten der Antriebseinrichtung des Fahrzeuges durchgehend leuchtet, wenn während dieser Fahrt ein Fehler von der Prüfeinrichtung (52) erkannt wurde.

Die dauerhafte Speicherung der Fehler im Fehlerspeicher (47) ermöglicht es mittels einer Diagnoseschnittstelle den Fehlerspeicher (47) von einer autorisierten Stelle auslesen und löschen zu lassen, so daß sich im nachhinein eine Fehlerstatistik aufstellen läßt, die Rückschlüsse auf das funktionelle Verhalten der Antiblockier-Einrichtung erlaubt.

Für die beschriebene Antiblockier-Einrichtung gilt, daß als das Ergebnis einer Fehlerprüfung der Prüfeinrichtung (52) das auf hier nicht weiter dargestellte Weise mittels einer Auswerteeinrichtung überprüfte Ergebnis mehrerer Einzelprüfungen gilt. In diesem Fall werden mehrere solcher Einzelprüfungen (z.B. fünf) als eine so definierte Fehlerprüfung durchlaufen, bevor eine Fehlerspeicherung erfolgt. Diese Funktion stellt sicher, daß kurzfristige Störungen der Antiblockier-Einrichtung, die nicht als konkrete Fehler vorliegen auch nicht als solche erkannt werden, nicht gespeichert werden. Hierdurch wird eine Übersensibilisierung des Systems vermieden, und der Fahrer oder der Prüfer des Radfahrzeuges wird nur über Fehler informiert, die für die Funktion der Antiblockier-Einrichtung relevant sind.

Bei der Definition der vorgegebenen Mindestgeschwindigkeit des Fahrzeuges beim beschriebenen Ausführungsbeispiel ist zu berücksichtigen, daß der Wert dieser Mindestgeschwindigkeit aus Sicherheitsgründen höher gewählt ist als die Geschwindigkeit bzw. die von den Drehzahlsensoren gemessene Drehzahl, von der ab überhaupt brauchbare Sensorsignale erzeugt werden.

## Patentansprüche

1. Einrichtung mit Mitteln zur Fehler-Erkennung und -Anzeige für Komponenten und/oder Funktionen in einem Fahrzeug mit folgenden Merkmalen:
a) es ist eine Prüfeinrichtung (52) vorgesehen, die dazu dient, das Fahrzeug mittels vorbestimmter erster Fehlerprüfungen auf Fehler erster Art hin zu überprüfen, die während eines ersten Betriebszustandes des Fahrzeuges auftreten und festgestellt werden können;
b) die Prüfeinrichtung (52) dient weiter dazu, das Fahrzeug mittels vorbestimmter zweiter Fehlerprüfungen auf Fehler zweiter Art hin zu überprüfen, die während eines zweiten Betriebszustandes des Fahrzeuges auftreten und festgestellt werden können;
c) es ist eine Anzeigeeinrichtung (18) zur Anzeige der Prüfergebnisse der Prüfeinrichtung (52) vorgesehen;
d) es ist eine Einschalt-Steuereinrichtung (22) zur Erzeugung von Einschaltsignalen für die Prüfeinrichtung (52) und die Anzeigeeinrichtung (18) vorgesehen;
e) die mittels eines Einschaltsignals der Einschalt-Steuereinrichtung (22) eingeschaltete Anzeigeeinrichtung (18) ist so an die mittels eines Einschaltsignals der Einschalt-Steuereinrichtung (22) eingeschaltete Prüfeinrichtung (52) angeschlossen, daß sie im Normalbetrieb nach der Beendigung des ersten vollständigen wenigstens die ersten Fehlerprüfungen enthaltenden Prüfzyklus der Prüfeinrichtung (52) ausschaltbar ist, wenn kein Fehler erster Art festgestellt wurde;
**gekennzeichnet durch** folgende Merkmale:
f) es ist ein löschbarer nicht-flüchtiger Fehlerspeicher (47) zur Speicherung wenigstens der Fehler zweiter Art vorgesehen;
g) abweichend von dem Normalbetrieb kann die mittels des Einschaltsignals der Einschalt-Steuereinrichtung (22) eingeschaltete Anzeigeeinrichtung (18) beim Vorliegen wenigstens eines Fehlers zweiter Art im Fehlerspeicher (47) erst nach Beendigung des ersten nach Erreichen des zweiten Betriebszustandes des Fahrzeuges ablaufenden und wenigstens die zweiten Fehlerprüfungen enthaltenden Prüfzyklus der Prüfeinrichtung (52) ausgeschaltet werden, wenn kein Fehler festgestellt wurde;
h) als zweiter Betriebszustand gilt der Zustand des Fahrzeugs, in dem sich das Fahrzeug befindet, wenn es schneller als mit einer vorgegebenen Mindestgeschwindigkeit fährt;
i) es ist ein löschbarer nicht-flüchtiger Mindestgeschwindigkeits-Speicher (5) vorgesehen, der nach dem Erreichen der vorgegebenen Mindestgeschwindigkeit gesetzt wird;
k) abweichend von dem Normalbetrieb wird die mit oder unmittelbar nach dem Einschalten der Antriebseinrichtung des Fahrzeugs eingeschaltete Anzeigeeinrichtung (18) bei gelöschtem Mindestgeschwindigkeits-Speicher (5) erst nach der Beendigung eines nach Erreichen der vorgegebenen Mindestgeschwindigkeit des Fahrzeugs ablaufenden Prüfzyklus der Prüfeinrichtung (52) ausgeschaltet, wenn kein Fehler festgestellt wird.

2. Einrichtung nach Anspruch 1, **dadurch gekennzeichnet, daß** die Einschalt-Steuereinrichtung (22) so ausgebildet ist, daß sie mit oder unmittelbar nach dem Einschalten des Fahrzeuges Einschaltsignale für die Prüfeinrichtung (52) und die Anzeigeeinrichtung (18) erzeugt.

3. Einrichtung nach Anspruch 1 oder 2, **dadurch gekennzeichnet, daß** die Prüfeinrichtung (52) so ausgebildet ist, daß jeder Prüfzyklus erste Fehlerprüfungen und zweite Fehlerprüfungen enthält.

4. Einrichtung nach wenigstens einem der vorhergehenden Ansprüche, **dadurch gekennzeichnet, daß** wenigstens eine Fehlerprüfung aus mehreren, unmittelbar aufeinanderfolgenden Einzelprüfungen besteht, deren Ergebnisse in einer Auswerteeinrichtung zu dem Ergebnis der Fehlerprüfung zusammengefaßt werden.

5. Einrichtung nach wenigstens einem der vorhergehenden Ansprüche **gekennzeichnet durch** die folgenden Merkmale:
a) als erster Betriebszustand gilt ein Zustand des Fahrzeugs, in dem es unbewegt ist;
b) als zweiter Betriebszustand gilt der Fahrzustand oder eine Bewegung des nicht fahrenden Fahrzeugs.

6. Einrichtung nach Anspruch 5, wobei zur Erfassung von Drehbewegungen von Rädern oder Antriebsteilen des Fahrzeugs Drehzahlsensoren (57 bis 60) vorgesehen sind, **gekennzeichnet durch** die folgenden Merkmale:
a) als zweiter Betriebszustand gilt das Vorliegen einer von den Drehzahlsensoren gemessenen Mindestdrehzahl oder ein Mindestwert einer aus den Signalen der Drehzahlsensoren (57 bis 60) abgeleiteten Größe;
b) als Fehler zweiter Art gelten Fehler der Drehzahlsensoren (57 bis 60) und/oder der Drehzahlsensor-Signale und/oder Fehler von Auswerteeinrichtungen, die zur Auswertung oder Verarbeitung der Drehzahlsensor-Signale dienen.

7. Einrichtung nach Anspruch 6, **dadurch gekennzeichnet, daß** als Fehler zweiter Art nur solche den Drehzahlsensoren (57 bis 60) und deren Ausgangssignalen zugeordnete Fehler gelten, die oberhalb einer bestimmten Drehzahl feststellbar sind.

8. Einrichtung nach Anspruch 5, 6 oder 7, **gekennzeichnet durch** die folgenden Merkmale:
a) die Steuereinrichtung ist als Antiblockier-Regeleinrichtung und/oder Antriebsschlupf-Regeleinrichtung ausgebildet;
b) die Drehzahlsensoren (57 bis 60) sind jeweils wenigstens einem Rad oder einer Achse des Fahrzeugs zugeordnet.

9. Einrichtung nach einem der vorhergehenden Ansprüche, **dadurch gekennzeichnet, daß** Mittel (8, 11, 12) vorgesehen sind, mittels derer der Mindestgeschwindigkeits-Speicher (5) nach dem Einbau einer neuen Steuereinrichtung und/oder dem Neu-Einstellen der Steuereinrichtung löschbar ist.

10. Einrichtung nach einem der vorhergehenden Ansprüche, **dadurch gekennzeichnet, daß** Mittel (12, 33, 39) vorgesehen sind, mittels derer der Mindestgeschwindigkeits-Speicher (5) mit oder nach dem Löschen des Fehlerspeichers (47) oder eines Teils (46) davon löschbar ist.

11. Einrichtung nach einem der vorhergehenden Ansprüche, **dadurch gekennzeichnet, daß** abweichend von dem Normalbetrieb die mit oder unmittelbar nach dem Einschalten der Antriebseinrichtung des Fahrzeugs eingeschaltete Anzeigeeinrichtung (18) auch im Zusammenhang mit dem erstmaligen Einschalten der Antriebseinrichtung nach dem Einbau einer neuen Steuereinrichtung oder dem Neu-Einstellen der Steuereinrichtung erst nach der Beendigung eines nach Erreichen einer vorgegebenen Mindestgeschwindigkeit des Fahrzeugs ablaufenden Prüfzyklus der Prüfeinrichtung (52) ausgeschaltet wird, wenn kein Fehler festgestellt wird.

12. Einrichtung nach wenigstens einem der Ansprüche 1 bis 9 oder nach Anspruch 11, **dadurch gekennzeichnet, daß** abweichend von dem Normalbetrieb die mit oder unmittelbar nach dem Einschalten der Antriebseinrichtung eingeschaltete Anzeigeeinrichtung (18) auch im Zusammenhang mit dem erstmaligen Einschalten der Antriebseinrichtung nach dem Löschen des Fehlerspeichers (47) oder eines Teils (46) davon erst nach der Beendigung eines nach Erreichen einer vorgegebenen Mindestgeschwindigkeit des Fahrzeugs ablaufenden Prüfzyklus der Prüfeinrichtung (52) ausgeschaltet wird, wenn kein Fehler festgestellt wird.

13. Einrichtung nach wenigstens einem der vorhergehenden Ansprüche, **dadurch gekennzeichnet, daß** die Anzeigeeinrichtung als Warnleuchte (18) ausgebildet ist.

14. Einrichtung nach wenigstens einem der vorhergehenden Ansprüche, **gekennzeichnet durch** folgende Merkmale:
a) es ist eine löschbare nicht-flüchtige Speicherkopie mindestens eines Teiles des löschbaren nicht-flüchtigen Fehlerspeichers (47) vorgesehen, die wenigstens alle Fehler zweiter Art enthält;
b) abweichend von dem Normalbetrieb kann die mittels des Einschaltsignals der Einschalt-Steuereinrichtung (22) eingeschaltete Anzeigeeinrichtung (18) statt beim Vorliegen eines Fehlers zweiter Art im Fehlerspeicher (47) beim Vorliegen eines Fehlers in der Speicherkopie erst nach Beendigung des ersten nach Erreichen des zweiten Betriebszustandes des Fahrzeuges ablaufenden und wenigstens die zweiten Fehlerprüfungen enthaltenden Prüfzyklus der Prüfeinrichtung (52) ausgeschaltet werden, wenn kein Fehler festgestellt wurde.

15. Einrichtung nach Anspruch 14, **dadurch gekennzeichnet, daß** nach einer bestimmten Anzahl von Einschaltvorgängen des Fahrzeuges der Inhalt der Speicherkopie gelöscht wird, falls bis zum Zeitpunkt des Erreichens der bestimmten Anzahl von Einschaltvorgängen kein Fehler mehr in der Speicherkopie gespeichert wurde.

16. Einrichtung nach Anspruch 15, **dadurch gekennzeichnet, daß** die bestimmte Anzahl von Einschaltvorgängen eine beliebige natürliche Zahl darstellt, die gleich oder größer als drei ist.

17. Verfahren zur Anwendung einer Einrichtung nach wenigstens einem der vorhergehenden Ansprüche, **gekennzeichnet durch** die folgenden Merkmale:
a) es wird zunächst das Ergebnis des ersten vollständigen Prüfzyklus der Prüfeinrichtung (52) festgestellt;
b) falls während des ersten vollständigen Prüfzyklus ein Fehler festgestellt wird, bleibt die Anzeigeeinrichtung (18) eingeschaltet;
c) falls während des ersten vollständigen Prüfzyklus kein Fehler festgestellt wird, wird die Anzeigeeinrichtung (18) beim Vorliegen wenigstens eines Fehlers zweiter Art im Fehlerspeicher (47) erst nach der Beendigung eines nach Erreichen des zweiten Betriebszustandes ablaufenden Prüfzyklus der Prüfeinrichtung (52) ausgeschaltet, wenn kein Fehler festgestellt wird.

18. Verfahren zur Anwendung einer Einrichtung nach wenigstens einem der Ansprüche 1 bis 16, **gekennzeichnet durch** die folgenden Merkmale:
a) nach dem Einschalten des Fahrzeuges wird zunächst geprüft, ob im Fehlerspeicher (47) wenigstens ein Fehler zweiter Art gespeichert ist;
b) falls im Fehlerspeicher (47) ein Fehler zweiter Art gespeichert ist, wird die Anzeigeeinrichtung (18) erst nach der Beendigung eines nach Erreichen des zweiten Betriebszustandes des Fahrzeuges ablaufenden Prüfzyklus der Prüfeinrichtung (52) ausgeschaltet, wenn kein Fehler festgestellt wird;
c) falls im Fehlerspeicher (47) kein Fehler zweiter Art gespeichert ist, wird die Anzeigeeinrichtung (18) nach der Beendigung des ersten vollständigen Prüfzyklus der Prüfeinrichtung (52) ausgeschaltet, wenn kein Fehler festgestellt wird.

## Claims

1. Installation with means for fault detecting and display for components and/or functions in a vehicle having the following features:
a) a testing device (52) is provided which serves to check the vehicle by means of predetermined first fault tests for faults of a first type which may occur and be detected during a first operating state of the vehicle;
b) the testing device (52) further serves to check the vehicle by means of predetermined second fault tests for faults of a second type which may occur and be detected during a second operating state of the vehicle;
c) a display device (18) is provided for displaying the test results of the testing device (52);
d) a switch-on control device (22) is provided to produce switch-on signals for the testing device (52) and the display device (18);
e) the display device (18) switched on by means of a switch-on signal of the switch-on control device (22) is connected to the testing device (52) switched on by means of a switch-on signal of the switch-on control device (22) in such a way that in normal operation, after completion of the first full test cycle of the testing device (52), containing at least the first fault tests, it can be switched off if no fault of the first type was detected;
**characterised by** the following features:
f) an erasable non-volatile fault store (47) is provided for storing at least the faults of the second type;
g) deviating from normal operation, the display device (18) switched on by means of the switch-on signal of the switch-on control device (22), when there is at least one fault of the second type in the fault store (47), can be switched off only after completion of the first test cycle of the testing device (52) running after the second operating state of the vehicle is reached and containing at least the second fault tests, if no fault was detected;
h) the second operating state is the state which the vehicle is in when it is travelling faster than at a predetermined minimum speed;
i) an erasable non-volatile minimum speed store (5) is provided which is set after the predetermined minimum speed is reached;
k) deviating from normal operation, the display device (18) switched on at or immediately after the switching-on of the drive means of the vehicle, with the minimum speed store (5) erased, is switched off only after completion of a test cycle of the testing device (52) running after the predetermined minimum speed of the vehicle is reached, when no fault is detected.

2. Installation according to Claim 1, **characterised in that** the switch-on control device (22) is so constructed that at or immediately after the switching-on of the vehicle it produces switch-on signals for the testing device (52) and the display device (18).

3. Installation according to Claim 1 or 2, **characterised in that** the testing device (52) is so constructed that each test cycle contains first fault tests and second fault tests.

4. Installation according to at least one of the preceding claims, **characterised in that** at least one fault test consists of a plurality of individual tests which follow directly one upon the other, and the results of which are combined, in an evaluation device, into the result of the fault test.

5. Installation according to at least one of the preceding claims, **characterised by** the following features:
a) the first operating state is a state of the vehicle in which it is not moved;
b) the second operating state is the travelling state or a movement of the vehicle when not travelling.

6. Installation according to Claim 5, wherein for detection of rotational movements of wheels or drive parts of the vehicle, rotation speed sensors (57 to 60) are provided, **characterised by** the following features:
a) the second operating state is the presence of a minimum rotation speed, measured by the rotation speed sensors, or a minimum value of a magnitude derived from the signals from the rotation speed sensors (57 to 60);
b) faults of the second type are faults of the rotation speed sensors (57 to 60) and/or of the rotation speed sensor signals and/or faults of evaluation devices which serve to evaluate or process the rotation speed sensor signals.

7. Installation according to Claim 6, **characterised in that** as faults of the second type, the only faults associated with the rotation speed sensors (57 to 60) and their output signals that are valid are those that are able to be detected above a particular rotation speed.

8. Installation according to Claim 5, 6 or 7, **characterised by** the following features:
a) the control device is in the form of an anti-lock regulating device and/or drive slippage regulating device;
b) the rotation speed sensors (57 to 60) are each associated with at least one wheel or axle of the vehicle.

9. Installation according to one of the preceding claims, **characterised in that** means (8, 11, 12) are provided by means of which the minimum speed store (5) can be erased after the installation of a new control device and/or the re-setting of the control device.

10. Installation according to one of the preceding claims, **characterised in that** means (12, 33, 39) are provided by means of which the minimum speed store (5) can be erased on or after the erasure of the fault store (47) or of a part (46) thereof.

11. Installation according to one of the preceding claims, **characterised in that**, deviating from normal operation, the display device (18) switched on at or immediately after the switching-on of the drive means of the vehicle is also, in conjunction with the first switching-on of the drive means after the installation of a new control device or the re-setting of the control device, switched off only after completion of a test cycle of the testing device (52) running after a predetermined minimum speed of the vehicle is reached, when no fault is detected.

12. Installation according to at least one of Claims 1 to 9 or according to Claim 11, **characterised in that**, deviating from normal operation, the display device (18) switched on at or immediately after the switching-on of the drive means is also, in conjunction with the first switching-on of the drive means after the erasure of the fault store (47) or a part (46) thereof, switched off only after completion of a test cycle of the testing device (52) running after a predetermined minimum speed of the vehicle is reached, when no fault is detected.

13. Installation according to at least one of the preceding claims, **characterised in that** the display device is in the form of a warning lamp (18).

14. Installation according to at least one of the preceding claims, **characterised by** the following features:
a) an erasable non-volatile store copy of at least a part of the erasable non-volatile fault store (47) is provided which contains at least all faults of the second type;
b) deviating from normal operation, the display device (18) switched on by means of the switch-on signal of the switch-on control device (22), instead of when there is a fault of the second type in the fault store (47), when there is a fault in the store copy, can be switched off only after completion of the first test cycle of the testing device (52) running after the second operating state of the vehicle is reached and containing at least the second fault tests, if no fault was detected.

15. Installation according to Claim 14, **characterised in that**, after a particular number of switching-on operations of the vehicle, the content of the store copy is erased if, up to the moment at which the particular number of switching-on operations is reached, there was no longer a fault stored in the store copy.

16. Installation according to Claim 15, **characterised in that** the particular number of switching-on operations represents any required natural number which is equal to or greater than three.

17. Method for using an installation according to at least one of the preceding claims, **characterised by** the following features:
a) first the result of the first full test cycle of the testing device (52) is determined;
b) if during the first full test cycle a fault is detected, the display device (18) remains switched on;
c) if during the first full test cycle no fault is detected, the display device (18), when there is at least one fault of the second type in the fault store (47), is switched off only after completion of a test cycle of the testing device (52) running after the second operating state is reached, when no fault is detected.

18. Method for using an installation according to at least one of Claims 1 to 16, **characterised by** the following features:
a) after the vehicle is switched on, first a test is made as to whether at least one fault of the second type is stored in the fault store (47);
b) if a fault of the second type is stored in the fault store (47), the display device (18) is switched off only after completion of a test cycle of the testing device (52) running after the second operating state of the vehicle is reached, when no fault is detected;
c) if no fault of the second type is stored in the fault store (47), the display device (18) is switched off after completion of the first full test cycle of the testing device (52), when no fault is detected.

## Revendications

1. Dispositif comportant des moyens pour détecter et indiquer des défauts de composants et/ou fonctions dans un véhicule, dispositif qui présente les particularités suivantes:
a) il comprend un dispositif de contrôle (52) servant à contrôler le véhicule, au moyen de premiers contrôles déterminés, sur la présence de défauts d'un premier type, pouvant apparaître et être constatés pendant un premier état de fonctionnement du véhicule;
b) le dispositif de contrôle (52) sert en outre à contrôler le véhicule, au moyen de seconds contrôles prédéterminés, sur la présence de défauts d'un second type, pouvant apparaître et être constatés pendant un second état de fonctionnement du véhicule;
c) il comprend un dispositif d'indication (18) pour indiquer les résultats des contrôles du dispositif de contrôle (52);
d) il comprend un dispositif de commande d'enclenchement (22) destiné à générer des signaux d'enclenchement pour le dispositif de contrôle (52) et le dispositif d'indication (18);
e) le dispositif d'indication (18), après avoir été enclenché au moyen d'un signal d'enclenchement du dispositif de commande d'enclenchement (22), est connecté au dispositif de contrôle (52), qui a également été enclenché au moyen d'un signal d'enclenchement du dispositif de commande d'enclenchement (22), de manière que dans le mode opératoire normal, après la fin du premier cycle de contrôle complet du dispositif de contrôle (52), contenant au moins les premiers contrôles sur la présence de défauts, le dispositif d'indication puisse être arrêté lorsqu'aucun défaut du premier type n'a été constaté;
**caractérisé en ce que**:
f) il comprend une mémoire de défauts (47) effaçable et rémanente pour mémoriser au moins les défauts du second type;
g) à la différence du mode opératoire normal, le dispositif d'indication (18), après avoir été enclenché au moyen du signal d'enclenchement du dispositif de commande d'enclenchement (22), peut être arrêté seulement, si la mémoire de défauts (47) contient au moins un défaut du second type, après la fin du premier cycle de contrôle du dispositif de contrôle (52), cycle contenant au moins les seconds contrôles sur la présence de défauts et se déroulant après que le second état de fonctionnement de l'appareil a été atteint, au cas où aucun défaut n'a été constaté au cours de ce cycle.
h) le second état de fonctionnement est l'état du véhicule dans lequel se trouve le véhicule lorsqu'il roule plus vite qu'à une vitesse minimale déterminée;
i) il comprend une mémoire de vitesse minimale (5) effaçable et rémanente, qui est chargée après qu'une vitesse minimale préfixée a été atteinte; et
j) à la différence du mode opératoire normal, le dispositif d'indication (18), après avoir été enclenché au moment de l'enclenchement du dispositif moteur du véhicule ou immédiatement après, est seulement arrêté, au cas où la mémoire de vitesse minimale (5) est effacée, après la fin d'un cycle de contrôle du dispositif de contrôle (52) qui se déroule après que la vitesse minimale du véhicule a été atteinte, au cas où aucun défaut n'est constaté.

2. Dispositif selon la revendication 1, **caractérisé en ce que** le dispositif de commande d'enclenchement (22) est réalisé pour générer des signaux d'enclenchement du dispositif de contrôle (52) et du dispositif d'indication (18) au moment de l'enclenchement ou immédiatement après l'enclenchement du véhicule.

3. Dispositif selon la revendication 1 ou 2, **caractérisé en ce que** le dispositif de contrôle (52) est réalisé de manière que chaque cycle de contrôle contienne des premiers et des seconds contrôles sur la présence de défauts.

4. Dispositif selon au moins une des revendications précédentes, **caractérisé en ce qu'**au moins un contrôle sur la présence de défauts se compose de plusieurs contrôles individuels qui se succèdent directement et dont les résultats sont rassemblés dans un dispositif d'exploitation pour fournir le résultat du contrôle sur la présence de défauts.

5. Dispositif selon au moins une des revendications précédentes, **caractérisé en ce que**:
a) le premier état de fonctionnement est un état dans lequel le véhicule est immobile; et,
b) le second état de fonctionnement est l'état de marche,ou un mouvement du véhicule alors qu'il ne circule pas.

6. Dispositif selon la revendication 5, en combinaison avec lequel des capteurs de vitesse (57 à 60) sont prévus pour détecter des mouvements de rotation de roues ou d'organes moteurs du véhicule, **caractérisé en ce que**:
a) le second état de fonctionnement est déterminé par l'existence d'une vitesse de rotation minimale, mesurée par les capteurs de vitesse, ou d'une valeur minimale d'une grandeur dérivée des signaux fournis par les capteurs de vitesse (57 à 60); et
b) les défauts du second type sont des défauts des capteurs de vitesse (57 à 60) et/ou des signaux fournis par ces capteurs et/ou des défauts de dispositifs d'exploitation servant à exploiter ou à traiter les signaux fournis par les capteurs de vitesse.

7. Dispositif selon la revendication 6, **caractérisé en ce que** les défauts du second type sont seulement des défauts coordonnés aux capteurs de vitesse (57 à 60), ainsi qu'à leurs signaux de sortie, qui sont constatables au-dessus d'une vitesse de rotation déterminée.

8. Dispositif selon la revendication 5, 6 ou 7, **caractérisé en ce que**:
a) le dispositif de commande est réalisé comme un dispositif de régulation antiblocage et/ou comme un dispositif de régulation antipatinage à l'entraînement;
b) les capteurs de vitesse (57 à 60) sont coordonnées chacun à au moins une roue ou un essieu du véhicule; et
c) le second état de fonctionnement es l'état dans lequel se trouve le véhicule lorsqu'il roule plus vite qu'une vitesse minimale préfixée.

9. Dispositif selon une des revendications précédentes, **caractérisé en ce qu'**il comprend des moyens (8, 11, 12) pour effacer la mémoire de vitesse minimale (5) après le montage d'un nouveau dispositif de commande et/ou un nouveau réglage du dispositif de commande.

10. Dispositif selon une des revendications précédentes, **caractérisé en ce qu'**il comprend des moyens (12, 33, 39) pour effacer la mémoire de vitesse minimale (5) au moment de l'effacement ou à la suite de l'effacement de la mémoire de défauts (47) ou d'une partie (46) de celle-ci.

11. Dispositif selon une des revendications précédentes, **caractérisé en ce que**, à la différence du mode opératoire normal, le dispositif d'indication (18), après avoir été enclenché au moment où immédiatement après l'enclenchement du dispositif moteur du véhicule, est également arrêté seulement, en relation avec le premier enclenchement du dispositif moteur à la suite du montage d'un nouveau dispositif de commande ou du nouveau réglage du dispositif de commande, après la fin d'un cycle de contrôle du dispositif de contrôle (52) se déroulant après qu'une vitesse minimale préfixée du véhicule a été atteinte, au cas où aucun défaut n'est constaté.

12. Dispositif selon au moins une des revendications 1 à 9 ou selon la revendication 11, **caractérisé en ce que**, à la différence du mode opératoire normal, le dispositif indicateur (18), après avoir été enclenché au moment ou immédiatement après l'enclenchement du dispositif moteur, est également arrêté seulement, en relation avec le premier enclenchement du dispositif moteur, après l'effacement de la mémoire de défauts (47) ou d'une partie (46) de cette mémoire, après la fin d'un cycle de contrôle du dispositif de contrôle (52) qui se déroule après qu'une vitesse minimale préfixée du véhicule a été atteinte, au cas où aucun défaut n'est constaté.

13. Dispositif selon au moins une des revendications précédentes, **caractérisé en ce que** le dispositif d'indication est un voyant lumineux (18).

14. Dispositif selon au moins une des revendications précédentes, **caractérisé en ce que**:
a) il comprend une copie de mémoire effaçable et rémanente d'une partie au moins de la mémoire de défauts (47) effaçable et rémanente, copie qui contient au moins tous les défauts du second type; et
b) à la différence du mode opératoire normal, le dispositif d'indication (18), après avoir été enclenché au moyen du signal d'enclenchement du dispositif de commande d'enclenchement (22), peut être arrêté seulement, au lieu de lors de la présence d'un défaut du second type dans la mémoire de défauts (47), en cas de présence de défauts dans la copie de mémoire, après la fin du premier cycle de contrôle du dispositif de contrôle (52), se déroulant après que le second état de fonctionnement de l'appareil a été atteint et contenant au moins les seconds contrôles sur la présence de défauts, au cas où aucun défaut n'a été constaté.

15. Dispositif selon la revendication 14, **caractérisé en ce que** le contenu de la copie de mémoire est effacé après un nombre déterminé d'opérations d'enclenchement du véhicule au cas où aucun défaut n'a plus été mémorisé dans la copie de mémoire jusqu'au moment où le nombre déterminé d'opérations d'enclenchement a été atteint.

16. Dispositif selon la revendication 15, **caractérisé en ce que** le nombre déterminé d'opérations d'enclenchement représente un nombre naturel quelconque égal ou supérieur à trois.

17. Procédé d'application d'un dispositif selon au moins une des revendications précédentes, **caractérisé en ce que**;
a) le résultat du premier cycle de contrôle complet du dispositif de contrôle (52) est déterminé d'abord;
b) au cas où un défaut a été constaté pendant le premier cycle de contrôle complet, le dispositif d'indication (18) reste enclenché; et
c) au cas où aucun défaut n'a été constaté pendant le premier cycle de contrôle complet, le dispositif d'indication (18), en présence d'au moins un défaut du second type dans la mémoire de défauts (47), est arrêté seulement après la fin d'un cycle de contrôle du dispositif de contrôle (52) se déroulant après que le second état de fonctionnement a été atteint, au cas où aucun défaut n'est constaté.

18. Procédé d'application d'un dispositif selon au moins une des revendications 1 à 16, **caractérisé en ce que**:
a) après l'enclenchement du véhicule, il est vérifié d'abord si au moins un défaut du second type est mémorisé dans la mémoire de défauts (47);
b) au cas où un défaut du second type est mémorisé dans la mémoire de défauts (47), le dispositif d'indication (18) est arrêté seulement après la fin d'un cycle de contrôle du dispositif de contrôle (52) se déroulant après que le second état de fonctionnement du véhicule a été atteint, au cas où aucun défaut n'est constaté; et
c) au cas où aucun défaut du second type n'est mémorisé dans la mémoire de défauts (47), le dispositif d'indication (18) est arrêté après la fin du premier cycle de contrôle complet du dispositif de contrôle(52), au cas où aucun défaut n'est constaté.
